# EUROPEAN PATENT APPLICATION

(11) **EP 4 583 555 A1**
(43) Date of publication of application: **09.07.2025**
(21) Application number: 23870738.4
(22) Date of filing: 25.09.2023
(51) Int. Cl.: H04W 8/26, H04W 72/04

(54) **NETWORK BRIDGE PORT ALLOCATION METHOD AND APPARATUS**

(30) Priority: 30.09.2022 CN 202211214558
(71) Applicant: ZTE CORPORATION, Shenzhen, Guangdong 518057 (CN)
(72) Inventor: DU, Xiangwen, Shenzhen, Guangdong 518057 (CN); CHEN, Donghua, Shenzhen, Guangdong 518057 (CN); JIAN, Huijun, Shenzhen, Guangdong 518057 (CN); ZHAN, Yajun, Shenzhen, Guangdong 518057 (CN)
(74) Representative: Chimini, Francesco
(86) International application number: PCT/CN2023/121191
(87) International publication number: WO 2024/067509

(57) **Abstract**

Embodiments of the present disclosure provide a network bridge port allocation method and apparatus. The method includes: establishing, by a UE, a session association with a PDU; establishing a mapping table of an initial port number and an MAC address of a DS-TT according to the session association; and allocating an updated port number to the UE that re-accesses a session after release.

## Description

### Cross-Reference to Related Application

This disclosure claims the priority of Chinese patent application No. CN202211214558.0, filed on September 30, 2022 and entitled "NETWORK BRIDGE PORT ALLOCATION METHOD AND APPARATUS", the content of which is incorporated herein by reference in its entirety.

### Technical Field

Embodiments of the present disclosure relate to the field of communications, and in particular, to a network bridge port allocation method and apparatus.

### Background

As a time sensitive network (TSN) bridge, a 5GS is integrated with an external network. This 'logical' TSN bridge includes a TSN translator function for a user plane and a control plane) and is used for interaction between a TSN system and a 5GS. A 5GS TSN translator function is composed of a device-side TSN translator (DS-TT) and a network-side TSN translator (NW-TT). The 5GS provides an entry and exit for TSN through a user equipment (UE)-side TSN translator (DS-TT) and the network-side TSN translator (NW-TT). For each 5GS network bridge of the TSN, the port on the NW-TT supports connection to the TSN, and the port on the DS-TT side is associated with a protocol data unit (PDU) session, thus providing connection to the TSN.

When a UE initiates PDU session establishment, a user plane function (UPF) may allocates a port number of Ethernet port to the PDU session on the DS-TT, and reports and stores the port number and Mac address information of a DS-TT port together in a session management function (SMF). The SMF provides the port number of the DS-TT port of a relevant PDU session and an MAC address to a TSN application function (AF) through a policy control function (PCF). In practical applications, there is a situation where a DS-TT is offline and needs to be reconnected. After reconnection, a new PDU session is established, and the UPF needs to reallocate a port number to the DS-TT. Especially in an industrial Ethernet, a large number of DS-TT devices may be used in some cases. If a device is occasionally offline and needs to be reconnected, this will cause rapid changes in port numbers. As a result, 5GS network bridge information and network bridge configuration information are frequently refreshed. For a DS-TT device that is offline and needs to be reconnected, a TSN service is fixed, so that it is not expected that the 5GS network bridge information and the network bridge configuration information are frequently refreshed.

### Summary

Embodiments of the present disclosure provide a network bridge port allocation method and apparatus, to at least solve the problem that a network topology is unstable because of frequent refreshing of 5GS network bridge information and network bridge configuration information due to a change in a port number in the related art.

According to an embodiment of the present disclosure, a network bridge port allocation method is provided, including: establishing, by a user equipment (UE), a session association with a protocol data unit (PDU); establishing a mapping table of an initial port number and a media access control (MAC) address of a device-side time sensitive network translator (DS-TT) according to the session association; and allocating an updated port number to the UE that releases the session.

According to another embodiment of the present disclosure, a network bridge port allocation apparatus is provided, including: a session establishment module, configured to establish, a session association between a user equipment (UE) and a protocol data unit (PDU); a mapping table establishment module, configured to establish a mapping table of an initial port number and a media access control (MAC) address of a device-side time sensitive network translator (DS-TT) according to the session association; and an updated port number allocation module, configured to allocate an updated port number to the UE that re-accesses a session after release.

According to still another embodiment of the present disclosure, a computer-readable storage medium is further provided, having a computer program stored therein. The computer program is configured to perform the steps in any one of the method embodiments when run.

According to yet still another embodiment of the present disclosure, an electronic apparatus is further provided, including a memory and/or a processor. The memory stores a computer program. The processor is configured to execute the computer program to perform the steps in any one of the method embodiments.

### Brief Description of the Drawings

Fig. 1 is a block diagram of a hardware structure of a mobile terminal in a network bridge port allocation method according to an embodiment of the present disclosure;
Fig. 2 is a flowchart of a network bridge port allocation method according to an embodiment of the present disclosure;
Fig. 3 is a flowchart of establishing a session association according to an embodiment of the present disclosure;
Fig. 4 is a flowchart of establishing a mapping table according to an embodiment of the present disclosure;
Fig. 5 is a flowchart of a network bridge port allocation method according to an embodiment of the present disclosure;
Fig. 6 is a flowchart of a network bridge port allocation method according to an embodiment of the present disclosure;
Fig. 7 is a flowchart of an updated port number according to an embodiment of the present disclosure;
Fig. 8 is a structural block diagram of a network bridge port allocation apparatus according to an embodiment of the present disclosure;
Fig. 9 is a structural block diagram of a session establishment module according to an embodiment of the present disclosure;
Fig. 10 is a structural block diagram of a mapping table establishment module according to an embodiment of the present disclosure;
Fig. 11 is a structural block diagram of a network bridge port allocation apparatus according to an embodiment of the present disclosure;
Fig. 12 is a structural block diagram of an updated port number allocation module according to an embodiment of the present disclosure;
Fig. 13 is a schematic diagram of a network framework of a network bridge port allocation method according to a scenario embodiment of the present disclosure;
Fig. 14 is a flowchart of a network bridge port allocation method according to a scenario embodiment of the present disclosure; and
Fig. 15 is a flowchart of a network bridge port allocation method according to a scenario embodiment of the present disclosure.

### Detailed Description of the Embodiments

The embodiments of the present disclosure will be described in detail below with reference to the accompanying drawings and the embodiments.

It should be noted that the terms "first", "second", etc. in the specification and claims of the embodiments of the present disclosure and the above accompanying drawings are defined to distinguish similar objects, and do not have to be used to describe a specific order or sequence.

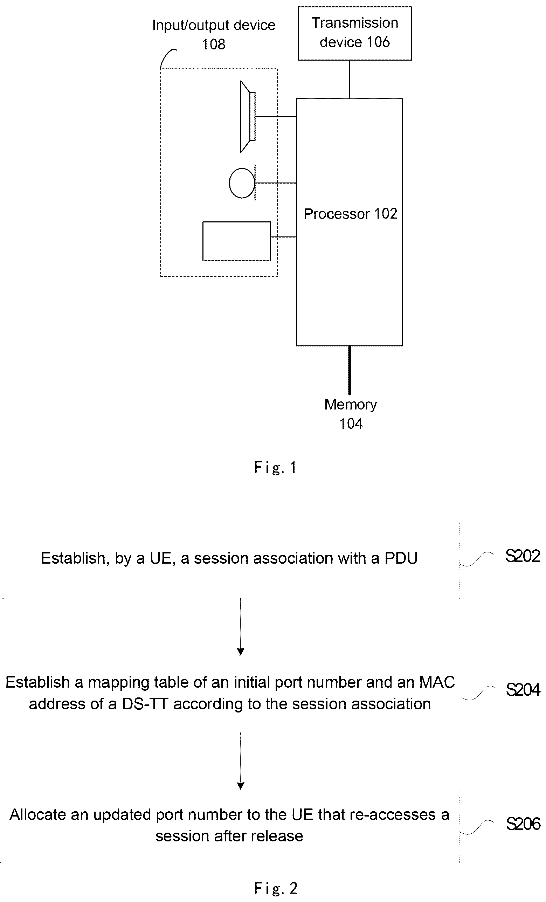

The method embodiments according to the embodiments of the present disclosure can be performed on a mobile terminal, a computer terminal, or a similar computing device. Being run on the mobile terminal is taken as an example. Fig. 1 is a block diagram of a hardware structure of a mobile terminal in a network bridge port allocation method according to an embodiment of the present disclosure. As shown in Fig. 1, the mobile terminal may include one or more (only one is shown in Fig. 1) processors 102 (which may include but are not limited to a micro processing unit (MCU), a field programmable gate array (FPGA), and other processing apparatuses) and memories 104 configured to store data. The mobile terminal may also include a transmission device 106 for a communication function and an input/output device 108. A person of ordinary skill in the art can understood that the structures shown in Fig. 1 are only illustrative, and a limitation will not be made on the structures of the mobile terminal. For example, the mobile terminal can also include more or fewer components than those shown in Fig. 1, or have configurations different from those shown in Fig. 1.

The memory 104 can be configured to store a computer program, such as software programs and modules of application software, such as computer programs corresponding to the network bridge port allocation method in the embodiments of the present disclosure. The processor 102 executes various functional applications and data processing by executing computer programs stored in the memory 104, that is, to implement the above method. The memory 104 may include high-speed random access memory and may also include a non-volatile memory, such as one or more magnetic storage apparatuses, a flash memory, or other non-volatile solid-state memories. In some examples, the memory 104 can further include a memory remotely located with respect to the processor 102. These remote memories can be connected to the mobile terminal through a network. Examples of the above network include, but are not limited to, Internets, intranets, local area networks, mobile communication networks, and combinations thereof.

The transmission device 106 is configured to receive or send data through a network. The specific examples of the above network may include a wireless network provided by a communication provider of the mobile terminal. In an example, the transmission device 106 includes a network interface controller (NIC) that can be connected to other network devices through a base station for communication with the Internet. In an example, the transmission device 106 can be a radio frequency (RF) module configured to communicate with the Internet in a radio manner.

This embodiment provides a network bridge port allocation method run on the above computer terminal. Fig. 2 is a flowchart of a network bridge port allocation method according to an embodiment of the present disclosure. As shown in Fig. 2, the flow includes the following steps:
Step S202, a user equipment (UE) establishes a session association with a protocol data unit (PDU).
Step S204, a mapping table of an initial port number and a media access control (MAC) address of a device-side time sensitive network translator (DS-TT) is established according to the session association.
Step S206, an updated port number is allocated to the UE that re-accesses a session after release.

Through the above steps, the user equipment (UE) establishes the session association with the protocol data unit (PDU); the mapping table of the initial port number and the media access control (MAC) address of a device-side time sensitive network translator (DS-TT) is established according to the session association; and the updated port number is allocated to the UE that re-accesses a session after release. The problem that a network topology is unstable because of frequent refreshing of 5GS network bridge information and network bridge configuration information due to a change in a port number in the related art is solved, and effects of improving the stability of the network topology and reducing the system maintenance costs.

An executive body of the above steps may be, but is not limited to, a base station, a terminal, and the like.

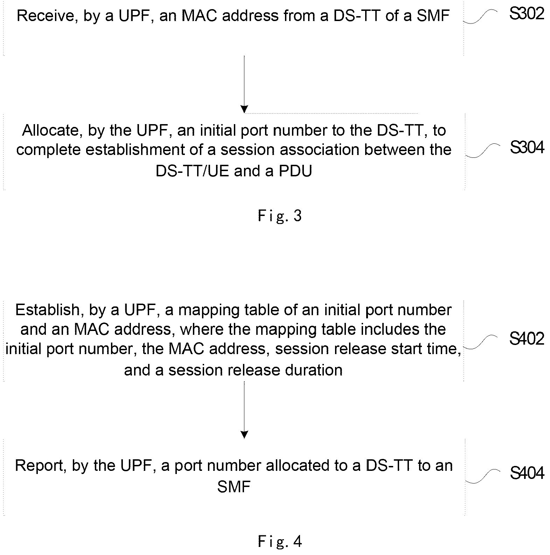

In an exemplary embodiment, Fig. 3 is a flowchart of establishing a session association according to an embodiment of the present disclosure. As shown in Fig. 3, a user equipment (UE) establishes a session association with a protocol data unit (PDU), which includes:
Step S302, a user plane function (UPF) receives the MAC address of the DS-TT from a session management function (SMF).
Step S304, the UPF allocates the initial port number to the DS-TT, to complete the establishment of the session association between the DS-TT/UE and the PDU.

In an exemplary embodiment, Fig. 4 is a flowchart of establishing a mapping table according to an embodiment of the present disclosure. As shown in Fig. 4, a mapping table of an initial port number and a media access control (MAC) address of a device-side time sensitive network translator (DS-TT) is established, which includes:
Step S402, a user plane function (UPF) establishes the mapping table of the initial port number and the MAC address, wherein the mapping table includes the initial port number, the MAC address, session release start time, and a session release duration.
Step S404, the UPF reports a port number allocated to the DS-TT to a session management function (SMF).

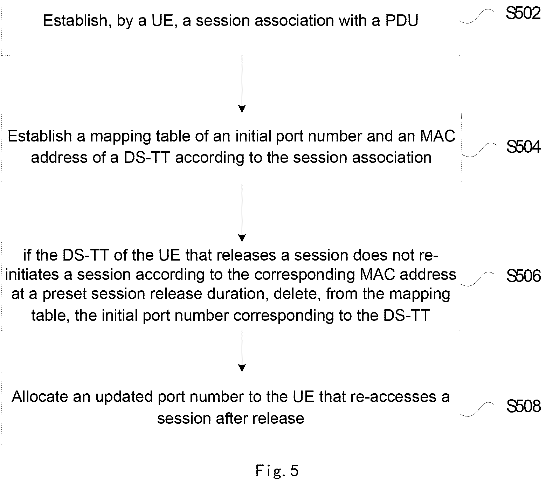

In an exemplary embodiment, after a mapping table of an initial port number and a media access control (MAC) address of a device-side time sensitive network translator (DS-TT) is established, the method further includes: If the DS-TT of the UE that releases a session does not re-initiates a session according to the corresponding MAC address at a preset session release duration, the initial port number corresponding to the DS-TT is deleted from the mapping table. Fig. 5 is a flowchart of a network bridge port allocation method according to an embodiment of the present disclosure. As shown in Fig. 5, the flow includes the following steps:
Step S502, a user equipment (UE) establishes a session association with a protocol data unit (PDU).
Step S504, a mapping table of an initial port number and a media access control (MAC) address of a device-side time sensitive network translator (DS-TT) is established according to the session association.
Step S506, if the DS-TT of the UE that releases a session does not re-initiates a session according to the corresponding MAC address at a preset session release duration, the initial port number corresponding to the DS-TT is deleted from the mapping table.
Step S508, an updated port number is allocated to the UE that re-accesses a session after release.

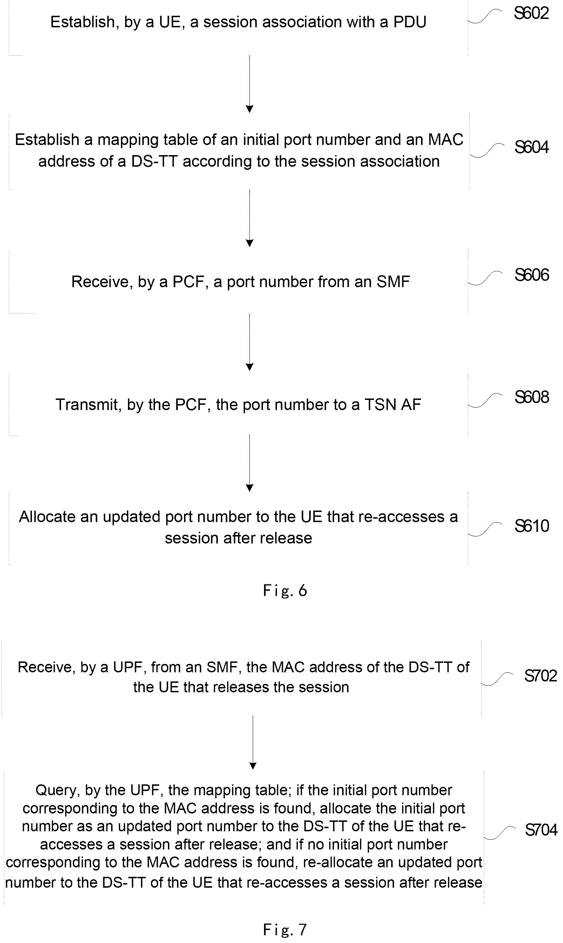

In an exemplary embodiment, after a mapping table of an initial port number and a media access control (MAC) address of a device-side time sensitive network translator (DS-TT) is established, the method further includes: A policy control function (PCF) receives the port number from a session management function (SMF); and the PCF transmits the port number to a time sensitive network application function (TSN AF). Fig. 6 is a flowchart of a network bridge port allocation method according to an embodiment of the present disclosure. As shown in Fig. 6, the flow includes the following steps:
Step S602, a user equipment (UE) establishes a session association with a protocol data unit (PDU).
Step S604, a mapping table of an initial port number and a media access control (MAC) address of a device-side time sensitive network translator (DS-TT) is established according to the session association.
Step S606, a policy control function (PCF) receives a port number from a session management function (SMF).
Step S608, the PCF transmits the port number to a time sensitive network application function (TSN AF).
Step S610, an updated port number is allocated to the UE that re-accesses a session after release.

In an exemplary embodiment, Fig. 7 is a flowchart of an updated port number according to an embodiment of the present disclosure. As shown in Fig. 7, the flow includes the following steps:
Step S702, a user plane function (UPF) receives, from a session management function (SMF), the MAC address of the DS-TT of the UE that releases the session.
Step S704, the UPF queries the mapping table; if the initial port number corresponding to the MAC address is found, the initial port number is allocated as an updated port number to the DS-TT of the UE that re-accesses a session after release; and if no initial port number corresponding to the MAC address is found, an updated port number is re-allocated to the DS-TT of the UE that re-accesses a session after release.

According to the descriptions in the foregoing implementations, a person skilled in the art may clearly learn that the method according to the foregoing embodiments may be implemented by relying on software and an essential commodity hardware platform or by using hardware, but the former is a better implementation in most cases. Based on such an understanding, the technical solutions of the embodiments of the present disclosure essentially, or the part contributing to the existing technology, may be presented in the form of a software product. The computer software product is stored in a storage medium (for example, a read-only memory (ROM)/random access memory (RAM), a magnetic disk, or an optical disk) including several instructions to enable a terminal device (which may be a mobile phone, a computer, a server, a network device, or the like) to perform the method described in the embodiments of the present disclosure.

This embodiment further provides a network bridge port allocation apparatus. The apparatus is configured to implement the above embodiments and preferred implementations. Those contents that have been described will not be elaborated. As used below, the term "module" can be a combination of software and/or hardware that implements a predetermined function. Although the apparatus described in the following embodiments is preferably implemented in software, the implementation of hardware or a combination of software and hardware is also possible and envisioned.

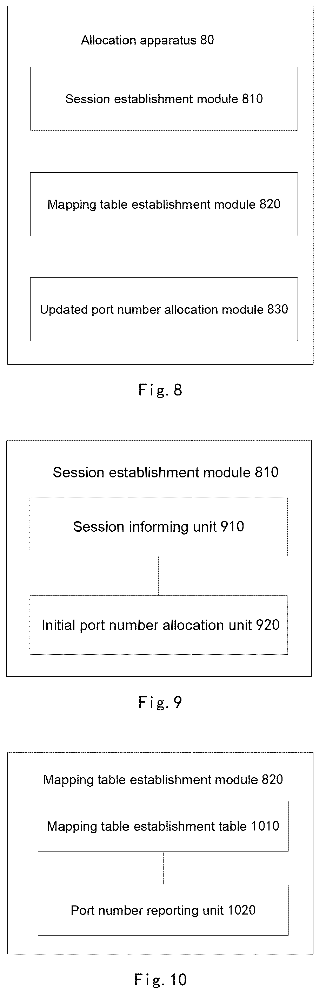

Fig. 8 is a structural block diagram of a network bridge port allocation apparatus according to an embodiment of the present disclosure. As shown in Fig. 8, the allocation apparatus 80 includes: a session establishment module 810, configured to establish, a session association between a user equipment (UE) and a protocol data unit (PDU); a mapping table establishment module 820, configured to establish a mapping table of an initial port number and a media access control (MAC) address of a device-side time sensitive network translator (DS-TT) according to the session association; and an updated port number allocation module 830, configured to allocate an updated port number to the UE that re-accesses a session after release.

In an exemplary embodiment, Fig. 9 is a structural block diagram of a session establishment module according to an embodiment of the present disclosure. As shown in Fig. 9, the session establishment module 810 includes: a session informing unit 910, configured to transmit the MAC address of the DS-TT from a user management function (SMF) to a user plane function (UPF), to inform the UPF to establish the session association; and an initial port number allocation unit 920, configured to allocate the initial port number to the DS-TT, to complete the establishment of the session association between the DS-TT/UE and the PDU.

In an exemplary embodiment, Fig. 10 is a structural block diagram of a mapping table establishment module according to an embodiment of the present disclosure. As shown in Fig. 10, the mapping table establishment module 820 includes: a mapping table establishment unit 1010, configured to establish the mapping table of the initial port number and the MAC address, wherein the mapping table includes the initial port number, the MAC address, session release start time, and a session release duration; and a port number reporting unit 1020, configured to report a port number allocated to the DS-TT to a session management function (SMF).

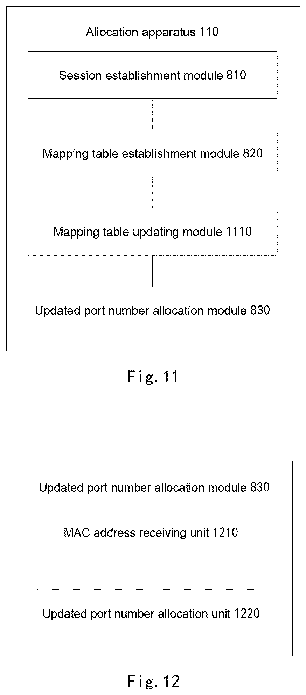

In an exemplary embodiment, Fig. 11 is a structural block diagram of a network bridge port allocation apparatus according to an embodiment of the present disclosure. As shown in Fig. 11, in addition to the modules in Fig. 8, the allocation apparatus 110 further includes: a mapping table updating module 1110, configured to: in a case that the DS-TT of the UE that releases a session does not re-initiates a session according to the corresponding MAC address at a preset session release duration, delete, from the mapping table, the initial port number corresponding to the DS-TT.

In an exemplary embodiment, Fig. 12 is a structural block diagram of an updated port number allocation module according to an embodiment of the present disclosure. As shown in Fig. 12, the updated port number allocation module 830 includes: an MAC address receiving unit 1210, configured to receive, from a session management function (SMF), the MAC address of the DS-TT of the UE that releases the session; and an updated port number allocation unit 1220, configured to: query the mapping table; and in a case that the initial port number corresponding to the MAC address is found, allocate the initial port number as an updated port number to the DS-TT of the UE that re-accesses a session after release; and in a case that no initial port number corresponding to the MAC address is found, re-allocate an updated port number to the DS-TT of the UE that re-accesses a session after release.

It should be noted that the above modules can be implemented through software or hardware. For the latter, the various modules can be implemented in the following ways, but not limited to: The above modules are all located in the same processor; or, the aforementioned modules can be located in different processors in the form of any combination.

An embodiment of the present disclosure further provides a computer-readable storage medium, having a computer program stored therein. The computer program is configured to perform the steps in any one of the method embodiments when run.

In an exemplary embodiment, the computer-readable storage medium mentioned above can include but not limited to: various media that can store computer programs, such as a USB flash drive, a read-only memory (ROM), a random access memory (RAM), a mobile hard disk drive, a magnetic disk, and an optical disk.

An embodiment of the present disclosure further provides an electronic apparatus, including a memory and a processor. The memory stores a computer program. The processor is configured to run the computer program to perform the steps in any one of the method embodiments.

In an exemplary embodiment, the aforementioned electronic apparatus may further include a transmission device and an input/output device, wherein the transmission device is connected to the above processor, and the input/output device is connected to the above processor.

The specific examples in this embodiment can refer to the examples described in the above embodiments and exemplary implementations, and will not be elaborated in this embodiment.

Obviously, those skilled in the art should understand that the various modules or steps of the embodiments of the present disclosure can be implemented using a universal computing apparatus, which can be concentrated on a single computing apparatus or distributed on a network composed of a plurality of computing apparatuses. The modules or steps can be implemented using program codes that can be executed by a computing apparatus, so that the modules or steps can be stored in a storage apparatus for execution by the computing apparatus. Furthermore, in some cases, the steps shown or described can be executed in an order different from those here, or the steps can be separately made into various integrated circuit modules, or a plurality of modules or steps among the modules or steps can be made into single integrated circuit modules for implementation. In this way, the embodiments of the present disclosure are not limited to any specific combinations of hardware and software.

To enable a person skilled in the art to better understand the technical solutions of the embodiments of the present disclosure, the following will elaborate specific scenario embodiments.

### Scenario embodiment I

Information of a 5GS network bridge includes a Bridge ID, a quantity of ports, and a port number list. A port number on an NW-TT side is pre-configured on a user plane function (UPF), and a port number on a DS-TT side is allocated by the UPF during PDU Session establishment. A 5GS reports the information of the 5GS network bridge to a TSN, and then the TSN issues relevant configurations for the network bridge, including the Bridge ID, configuration information of traffic scheduling on DS-TT/NW-TT ports, traffic forwarding information (TFI), and configuration information of each stream. The traffic forwarding information includes information of three aspects: a destination MAC address of a TSN service stream, a VLAN ID, and a port number in a Port MAP, which ensures the correctness of traffic forwarding.

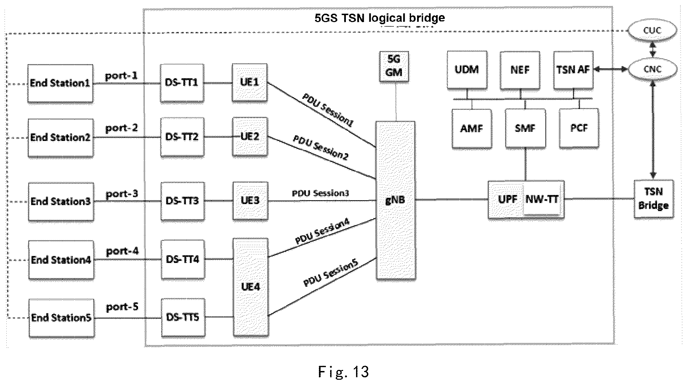

Fig. 13 is a schematic diagram of a network framework of a network bridge port allocation method according to a scenario embodiment of the present disclosure. The network bridge port allocation method provided in this embodiment of the present disclosure can be applied to a multi-port 5GS TSN bridge system shown in Fig. 13. A DS-TT port is a logical port dynamically created during PDU Session establishment, and a logical port number is allocated by a UPF to each port. A UE can include a plurality of DS-TTs. For example, UE4 includes two DS-TTs. Each DS-TT may have one or more ports. In a UPF, each DS-TT port has only one PDU Session. During the PDU session establishment, the UPF may allocate a port number to each DS-TT port, and report and store the port number in an SMF. The SMF provides the port number and MAC address of a DS-TT Ethernet port of a relevant PDU session to a TSN AF through a PCF. If the PDU session is released, SMF correspondingly informs the TSN AF. A CNC and the TSN AF exchange DS-TT and NW-TT port management information.

The network bridge port allocation method provided in this embodiment of the present disclosure includes:
A mapping table of MAC address information and the Ethernet port number allocated to the DS-TT port by the UPF is periodically stored on the UPF. The DS-TT port number is a logical port number dynamically created during PDU Session establishment. Each port has a unique record. The record is composed of four parameters: the port number of Ethernet port allocated by the UPF to the DS-TT, the Mac address information, aging start time, and an aging duration. When the port-PDU session is released, PDU session release time is recorded as aging start time, and a timer is activated. If the aging time reaches an aging duration, the record is deleted.

If the DS-TT port is offline and needs to be reconnected, a new PDU session needs to be created. The SMF transmits a DS-TT MAC address to the UPF through an N4 port packet forwarding control protocol (PFCP) session establishment/PFCP session modification request. The UPF queries a mapping table record according to the Mac address information of the port. If a record is found, no port number will be re-allocated. If no record is found, the UPF re-allocates a port number and updates the mapping table record of the port number and the Mac address information.

By using a scheduled storage method, it can effectively reduce frequent refreshing of 5GS network bridge information and network bridge configuration information due to rapid changes in port numbers caused by the fact that a device is offline at irregular time and needs to be reconnected, and the stability of a network topology is ensured; the system maintenance costs are reduced; and the performance is improved.

### Scenario embodiment II

In this scenario embodiment, the technical solution of this embodiment of the present disclosure will be elaborated in conjunction with specific processes. In this scenario embodiment, after a DS-TT is powered on and initiates a TSN service, since an offline DS-TT port is reconnected, within set memory time range, a UPF does not need to perform port re-allocation.

After the DS-TT is powered on, a port transmits a connection request to a UE, the request carrying an MAC address of the port. The UE obtains a port number of a DS-TT Ethernet port through a PDU Session establishment process.

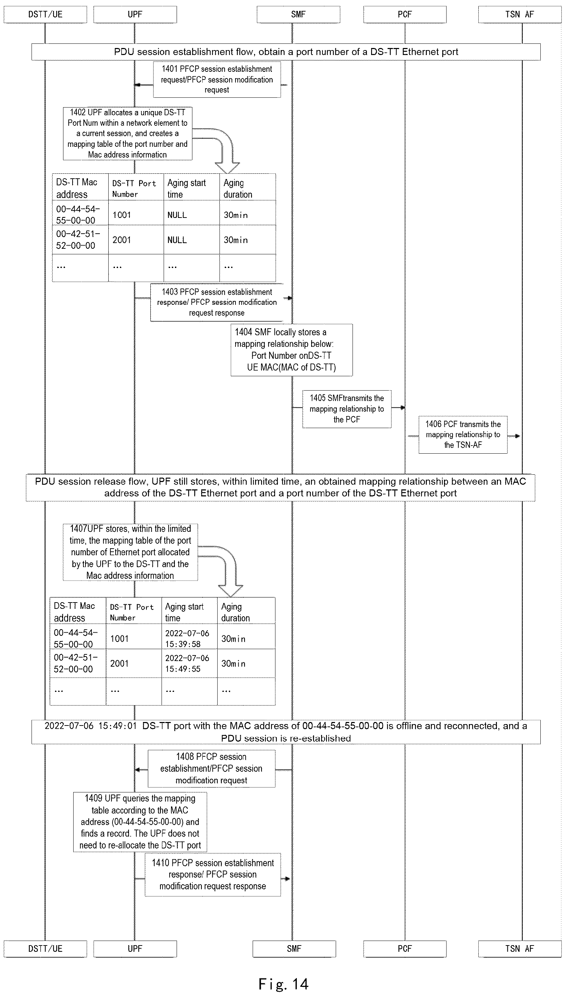

Fig. 14 is a flowchart of a network bridge port allocation method according to a scenario embodiment of the present disclosure. As shown in Fig. 14, the flow includes the following steps:
Step 1401, an SMF informs a UPF to establish a session through an N4 port PFCP session establishment request/PFCP session modification request, transmits a DS-TT Mac to the UPF, and indicates that a current session is a TSN session.
Step 1402, the UPF allocates a unique DS-TT port number within a network element to the current session. After the allocation of the port number is completed, a mapping table of the port number and Mac address information is created on the UPF. An example of the mapping table is as follows:

| DS-TT Mac address | DS-TT Port Number | Aging start time (PDU session release end time) | Aging duration |
|---|---|---|---|
| 00-44-54-55-00-00 | 1001 | NULL | 30 min |
| 00-42-51-52-00-00 | 2001 | NULL | 30 min |
| ... | ... | ... | ... |

As shown in the table above, the DS-TT port with the MAC address of 00-44-54-55-00-00 is allocated with the port number of 1001, and the DS-TT port with the MAC address of 00-44-54-52-00-00 is allocated with the port number of 2001. This mapping table is created during first PDU session establishment. The aging start time is NULL in this flow, so the aging time does not take effect.

Step 1403, the UPF transmits the DS-TT port number to an SMF through the N4 port PFCP session establishment/modification request.

Step 1404, the SMF locally stores a mapping relationship between the MAC address of the DS-TT Ethernet port and the DS-TT port number of the DS-TT Ethernet port.

Step 1405, the SMF transmits the mapping relationship between the MAC address of the DS-TT Ethernet port and the DS-TT port number of the of the DS-TT Ethernet port to a PCF.

Step 1406, the PCF transmits the mapping relationship between the MAC address of the DS-TT Ethernet port and the DS-TT port number of the DS-TT Ethernet port to a TSN-AF.

When the DS-TT or the UE is abnormal, the UE initiates a PDU Session release flow, and the UPF stores the mapping relationship between the MAC address of the DS-TT Ethernet port and the port number of the DS-TT Ethernet port within limited time.

Step 1407, the UPF stores, within the limited time, the mapping table of the port number of Ethernet port allocated by the UPF to the DS-TT and the Mac address information. An example of the mapping table is as follows:

| DS-TT Mac address | DS-TT Port Number | Aging start time (PDU session release end time) | Aging duration |
|---|---|---|---|
| 00-44-54-55-00-00 | 1001 | 15:39:58 on July 06, 2022 | 30 min |
| 00-42-51-52-00-00 | 2001 | 15:49:55 on July 06, 2022 | 30 min |
| ... | ... | ... | ... |

As shown in the above table, for the DS-TT port with the MAC address of 00-44-54-55-00-00, the PDU session release end time is 15:39:58 on July 06, 2022, and the limited-time storage duration is set to 30 min (for example). If the port is online again within 30 min, the UPF does not need to re-allocate a port number to the port. If the port is still offline after 30 min, the UPF will re-allocate a port number.

The DS-TT port with the MAC address of 00-44-54-55-00-00 is reconnected at 15:49:01 on July 06, 2022, and a PDU session is re-established.

Step 1408, the SMF informs the UPF to establish a session through an N4 port PFCP session establishment/modification request, and transmits a DS-TT Mac to the UPF.

Step 1409, the UPF queries the mapping table according to the MAC address (00-44-54-55-00-00) and finds a record. The UPF does not need to re-allocate the DS-TT port.

Step 1410, the UPF transmits the DS-TT port number from the original mapping table to the SMF through the N4 port PFCP session establishment/modification request.

### Scenario embodiment III

In this scenario embodiment, the technical solution of this embodiment of the present disclosure will be elaborated in conjunction with specific processes. In this scenario embodiment, after a DS-TT is powered on and initiates a TSN service, since an offline DS-TT is reconnected, within set memory time range, a UPF needs to perform port re-allocation.

After the DS-TT is powered on, a port transmits a connection request to a UE, the request carrying an MAC address of the port. The UE obtains a port number of a DS-TT Ethernet port through a PDU Session establishment process.

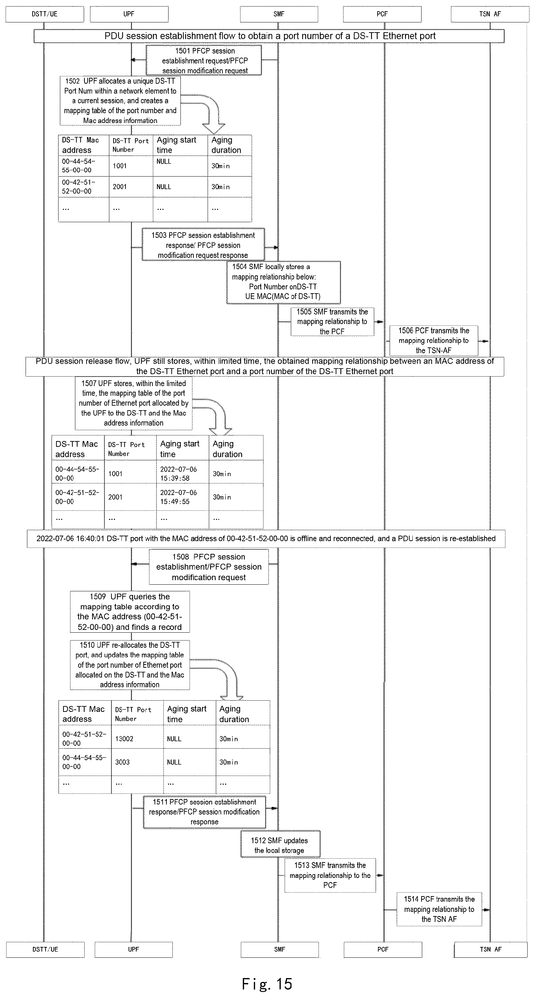

Fig. 15 is a flowchart of a network bridge port allocation method according to a scenario embodiment of the present disclosure. As shown in Fig. 15, the flow includes the following steps:
Step 1501, an SMF informs a UPF to establish a session through an N4 port PFCP session establishment/modification request, transmits a DS-TT Mac to the UPF, and indicates that a current session is a TSN session.

Step 1502, the UPF allocates a unique DS-TT port number within a network element to the current session. After the allocation of the port number is completed, a mapping table of the port number and Mac address information is created on the UPF. An example of the mapping table is as follows:

| DS-TT Mac address | DS-TT Port Number | Aging start time (PDU session release end time) | Aging duration |
|---|---|---|---|
| 00-44-54-55-00-00 | 1001 | NULL | 30 min |
| 00-42-51-52-00-00 | 2001 | NULL | 30 min |
| ... | ... | ... | ... |

As shown in the table above, the DS-TT port with the MAC address of 00-44-54-55-00-00 is allocated with the port number of 1001, and the DS-TT port with the MAC address of 00-44-54-52-00-00 is allocated with the port number of 2001. This mapping table is created during first PDU session establishment. The aging start time is NULL in this flow, so the aging time does not take effect.

Step 1503 the UPF transmits the DS-TT port number to an SMF through the N4 port PFCP session establishment/modification request.

Step 1504, the SMF locally stores a mapping relationship between the MAC address of the DS-TT Ethernet port and the DS-TT port number of the DS-TT Ethernet port.

Step 1505, the SMF transmits the mapping relationship between the MAC address of the DS-TT Ethernet port and the DS-TT port number of the DS-TT Ethernet port to a PCF.

Step 1506, the PCF transmits the mapping relationship between the MAC address of the DS-TT Ethernet port and the DS-TT port number of the DS-TT Ethernet port to a TSN-AF.

After the TSN service is completed, the UE initiates a PDU Session release flow, and the UPF stores the mapping relationship between the MAC address of the DS-TT Ethernet port and the port number of the DS-TT Ethernet port within limited time.

Step 1507, the UPF stores, within the limited time, the mapping table of the port number of Ethernet port allocated by the UPF to the DS-TT and the Mac address information. An example of the mapping table is as follows:

| DS-TT Mac address | DS-TT Port Number | Aging start time (PDU session release end time) | Aging duration |
|---|---|---|---|
| 00-44-54-55-00-00 | 1001 | 15:39:58 on July 06, 2022 | 30 min |
| 00-42-51-52-00-00 | 2001 | 15:49:55 on July 06, 2022 | 30 min |
| ... | ... | ... | ... |

As shown in the above table, for the DS-TT port with the MAC address of 00-44-54-52-00-00, the PDU session release end time is 15:49:55 on July 06, 2022, and the limited-time storage duration is set to 30 min (for example). If the port is online again within 30 min, the UPF does not need to re-allocate a port number to the port. If the port is still offline after 30 min, the UPF will re-allocate a port number.

The DS-TT port with the MAC address of 00-42-51-52-00-00 is reconnected at 16:40:01 on July 06, 2022, and a PDU session is re-established.

Step 1508, the SMF informs the UPF to establish a session through an N4 port PFCP session establishment/modification request, and transmits a DS-TT Mac to the UPF.

Step 1509, the UPF queries the mapping table according to the MAC address (00-42-51-52-00-00). If a query result is 0 (an original record has been aged and deleted within 30 min), namely, if no record is found, the UPF needs to re-allocate a DS-TT port.

Step 1510, the UPF re-allocates the DS-TT port, and updates the mapping table of the port number of Ethernet port allocated on the DS-TT and the Mac address information. The mapping table is as follows:

| DS-TT Mac address | DS-TT Port Number | Aging start time (PDU session release end time) | Aging duration |
|---|---|---|---|
| 00-44-54-55-00-00 | 3002 | NULL | 30 min |
| 00-42-51-52-00-00 | 3003 | NULL | 30 min |
| ... | ... | ... | ... |

As shown in the table above, the DS-TT port with the MAC address of 00-44-54-55-00-00 has been allocated with the port number of 3002, and the DS-TT port with the MAC address of 00-44-54-52-00-00 has been allocated with the port number of 3003. Since the aging start time is NULL in this PDU session establishment flow, the aging time does not take effect.

Step 1511, the UPF transmits the DS-TT port number from the changed mapping table to the SMF through the N4 port PFCP session establishment/modification request.

Step 1512, the SMF locally changes and stores a mapping relationship between the MAC address of the DS-TT Ethernet port and the DS-TT port number of the DS-TT Ethernet port.

Step 1513, the SMF transmits the changed mapping relationship between the MAC address of the DS-TT Ethernet port and the DS-TT port number of the DS-TT Ethernet port to a PCF.

Step 1514, the PCF transmits the changed mapping relationship between the MAC address of the DS-TT Ethernet port and the DS-TT port number of the DS-TT Ethernet port to a TSN-AF.

In summary, this embodiment of the present disclosure provides a network bridge port allocation method and apparatus, which can be applied to situations where a DS-TT port are offline and need to be reconnected, such as, a situation where a device is occasionally offline and needs to be reconnected, including DS-TT abnormal power outage, DS-TT restart, DS-TT network interruption, and the like. An industrial Ethernet protocol has started to support the TSN. The embodiments of the present disclosure is applicable to some situations where a DS-TT is offline and needs to be reconnected, especially a situation where a large number of DS-TT devices are used and each device is occasionally offline and needs to be reconnected.

The network bridge port allocation method and apparatus provided in the embodiments of the present disclosure can solve such a situation that a DS-TT is offline and needs to be reconnected. After reconnection, a new PDU session is established, and a UPF needs to reallocate a port number to the DS-TT. Especially when a large number of DS-TT devices are used, if a device is occasionally offline and needs to be reconnected, this will cause frequent changes in port numbers. As a result, 5GS network bridge information and network bridge configuration information are frequently refreshed. A method for regularly storing 5GS network bridge can effectively reduce the frequent refreshing of the 5GS bridge information and the network bridge configuration information. The stability of a network topology is ensured; the system maintenance costs are reduced; and the performance is improved.

The situation where a DS-TT is offline and needs to be reconnected includes DS-TT abnormal power outage, DS-TT restart, DS-TT network interruption, and the like. An N4 port PFCP signaling message carries a DS-TT MAC address, including: The SMF transmits the DS-TT MAC address in the PFCP session establishment/modification message to the UPF, and the UPF regularly stores a mapping table composed of four parameters: A port number of Ethernet port allocated by a UPF to a DS-TT, Mac address information, aging start time, and an aging duration, all of which fall within the scope of protection of the embodiments of the present disclosure.

The above descriptions are only preferred embodiments of the embodiments of the present disclosure Embodiments, and are not intended to limit the embodiments of the present disclosure. Those skilled in the art can make various changes and transformations on the embodiments of the present disclosure. Any modification, equivalent replacement, and improvement made within the principles of the embodiments of the present disclosure shall fall within the protection scope of the present disclosure.

## Claims

1. A network bridge port allocation method, comprising:
establishing, by a user equipment, UE, a session association with a protocol data unit, PDU;
establishing a mapping table of an initial port number and a media access control, MAC, address of a device-side time sensitive network translator, DS-TT, according to the session association; and
allocating an updated port number to the UE that re-accesses a session after release.

2. The method according to claim 1, wherein the establishing, by the UE, a session association with the PDU comprises:
receiving, by a user plane function, UPF, an MAC address of the DS-TT from a session management function, SMF; and
allocating, by the UPF, the initial port number to the DS-TT, to complete the establishment of the session association between the DS-TT/UE and the PDU.

3. The method according to claim 1, wherein establishing the mapping table of an initial port number and the MAC address of the DS-TT comprises:
establishing, by a user plane function, UPF, the mapping table of the initial port number and the MAC address, wherein the mapping table comprises the initial port number, the MAC address, session release start time, and a session release duration; and
reporting, by the UPF, a port number allocated to the DS-TT to a session management function, SMF.

4. The method according to claim 1, wherein after the establishing a mapping table of an initial port number and the MAC address of the DS-TT, the method further comprises:
in a case that the DS-TT of the UE that releases a session does not re-initiates a session according to the corresponding MAC address at a preset session release duration, deleting, from the mapping table, the initial port number corresponding to the DS-TT.

5. The method according to claim 1, wherein after the establishing a mapping table of an initial port number and the MAC address of the DS-TT, the method further comprises:
receiving, by a policy control function, PCF, a port number from a session management function, SMF; and
transmitting, by the PCF, the port number to a time sensitive network application function, TSN AF.

6. The method according to claim 1, wherein the allocating an updated port number to the UE that re-accesses a session after release comprises:
receiving, by a user plane function, UPF, from a session management function, SMF, the MAC address of the DS-TT of the UE that re-accesses a session after release;
querying, by the UPF, the mapping table; in a case that the initial port number corresponding to the MAC address is found, allocating the initial port number as an updated port number to the DS-TT of the UE that re-accesses a session after release; and in a case that no initial port number corresponding to the MAC address is found, re-allocating an updated port number to the DS-TT of the UE that re-accesses a session after release.

7. A network bridge port allocation apparatus, comprising:
a session establishment module, configured to establish, a session association between a user equipment, UE and a protocol data unit, PDU;
a mapping table establishment module, configured to establish a mapping table of an initial port number and a media access control, MAC, address of a device-side time sensitive network translator, DS-TT, according to the session association; and
an updated port number allocation module, configured to allocate an updated port number to the UE that re-accesses a session after release.

8. The apparatus according to claim 7, wherein the session establishment module comprises:
a session informing unit, configured to transmit the MAC address of the DS-TT from a user management function, SMF, to a user plane function, UPF, to inform the UPF to establish the session association; and
an initial port number allocation unit, configured to allocate the initial port number to the DS-TT, to complete the establishment of the session association between the DS-TT/UE and the PDU.

9. The apparatus according to claim 7, wherein the mapping table establishment module comprises:
a mapping table establishment unit, configured to establish the mapping table of the initial port number and the MAC address, wherein the mapping table comprises the initial port number, the MAC address, session release start time, and a session release duration; and
a port number reporting unit, configured to report a port number allocated to the DS-TT to a session management function, SMF.

10. The apparatus according to claim 7, further comprising:
a mapping table updating module, configured to: in a case that the DS-TT of the UE that releases a session does not re-initiates a session according to the corresponding MAC address at a preset session release duration, delete, from the mapping table, the initial port number corresponding to the DS-TT.

11. The apparatus according to claim 7, wherein the updated port number allocation module comprises:
an MAC address receiving unit, configured to receive, from a session management function (SMF), the MAC address of the DS-TT of the UE that releases the session; and
an updated port number allocation unit, configured to: query the mapping table; and in a case that the initial port number corresponding to the MAC address is found, allocate the initial port number as an updated port number to the DS-TT of the UE that releases the session; and in a case that no initial port number corresponding to the MAC address is found, re-allocate an updated port number to the DS-TT of the UE that re-accesses a session after release.

12. A computer-readable storage medium, having a computer program stored therein, wherein the computer program is configured to, when executed by a processor, cause the processor to perform the method according to any one of claims 1 to 6.

13. An electronic apparatus, comprising a memory, a processor, and a computer program stored on the memory and executable on the processor, wherein the processor is configured to execute the computer program to implement the method according to any one of claims 1 to 6.
